(19) Europäisches Patentamt
European Patent Office
Office européen des brevets

(11) Publication number: **0 395 207 B1**

(12) **EUROPEAN PATENT SPECIFICATION**

(45) Date of publication of patent specification: **12.07.95**

(51) Int. Cl.[6]: **C09B 62/085**, D06P 1/384

(21) Application number: **90302653.2**

(22) Date of filing: **13.03.90**

The file contains technical information submitted after the application was filed and not included in this specification

(54) **New reactive dyes.**

(30) Priority: **24.04.89 GB 8909248**

(43) Date of publication of application:
**31.10.90 Bulletin 90/44**

(45) Publication of the grant of the patent:
**12.07.95 Bulletin 95/28**

(84) Designated Contracting States:
**AT BE CH DE ES FR GB GR IT LI NL SE**

(56) References cited:
**FR-A- 2 319 689**
**FR-A- 2 525 646**
**FR-A- 2 569 213**
**GB-A- 946 998**
**GB-A- 2 054 662**

(73) Proprietor: **ZENECA LIMITED**
**15 Stanhope Gate**
**London W1Y 6LN (GB)**

(72) Inventor: **Renfrew, Andrew Hunter Morris**
**390 Holcombe Road,**
**Greenmount**
**Bury,**
**Lancashire BL8 4DT (GB)**
Inventor: **Taylor, John Anthony**
**20 Branksome Avenue**
**Prestwich,**
**Manchester M25 5AG (GB)**

(74) Representative: **Mayall, John et al**
**Intellectual Property Group**
**Zeneca Specialties**
**P.O. Box 42**
**Hexagon House**
**Blackley**
**Manchester M9 8ZS (GB)**

EP 0 395 207 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to new reactive dyes and more particularly to water soluble reactive dyes of the azo series, their manufacture and application to textile substrates.

In French Specification No.2319689 there are described and claimed dyestuffs of the formula (A):

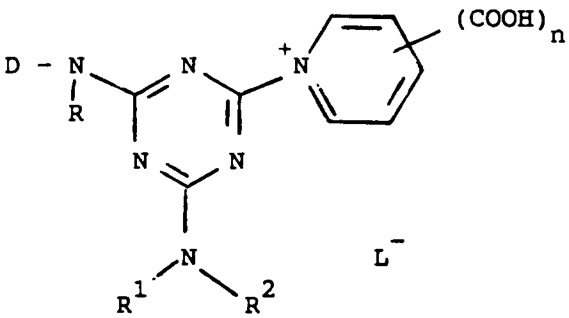

(A)

wherein D is a chromophore, R represents H or a lower alkyl, $R^1$ and $R^2$ represent H or alkyl, or $R^1$ and $R^2$ are joined together as $-(CH_2)_4-$, $-(CH_2)_5-$ or $-(CH_2CO_2OCH_2CH_2)-$ to form a ring, n is 1 or 2 and $L^-$ represents a negatively charged counterion.

British Patent No.946998 describes and claims new dyestuffs of the formula (B):

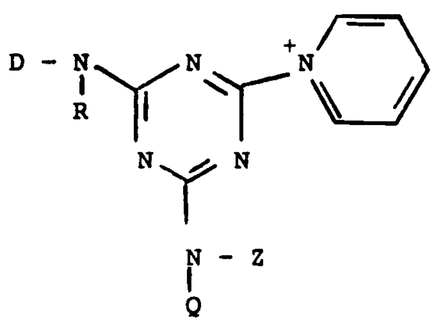

(B)

wherein D is a monoazo chromophore, R and Q independently represent H or lower alkyl, and Z is a phenyl radical containing at least one sulphonic acid or carboxylic acid group.

FR-A-2 569 213 discloses dye compounds e.g. having the formula

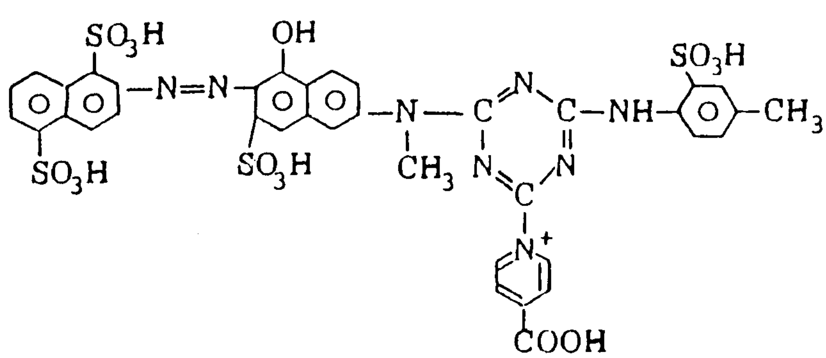

(example 11) the build up and fixation efficiency properties of which, however, are desired to be improved.

According to the present invention, there is provided a reactive dye which, in the free acid form, is represented by the formula (I):

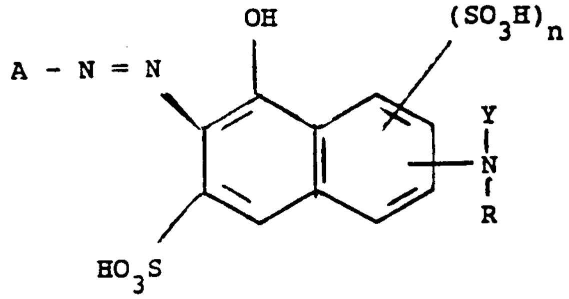

(I)

wherein:

| | |
|---|---|
| A | is optionally substituted naphthyl; |
| the -NRY group | is attached to the naphthalene nucleus in the 6- or 7-position relative to the -OH group; |
| n | is 0 or 1, the $SO_3H$ group, when n is 1, being attached to the 5-position or to whichever is free of the 6- and 7-positions; |
| R | is optionally substituted alkyl or alkenyl containing up to 10 carbon atoms; |
| Y | is a group of the formula (II): |

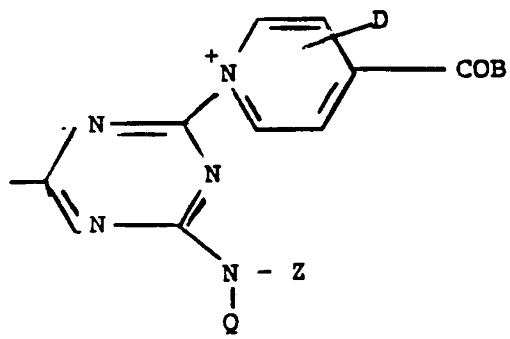

(II)

wherein

| | |
|---|---|
| Q | is H or optionally substituted alkyl, cycloalkyl or alkenyl containing up to 10 carbon atoms; |
| Z | is phenyl; |
| D | is H, chloro, $C_{1-4}$-alkoxy, $SO_3H$ or $C_{1-4}$-alkyl; and |
| B | is OH; |

A is optionally substituted naphthyl and the optional substituents are preferably selected from nitro, $C_{1-4}$-alkyl, $C_{1-4}$-alkoxy, sulpho, carboxyl, acetylamino and halo. It is especially preferred that A is naphthyl carrying at least 1 and preferably from 1 to 3 substituents and especially from 1 to 3 sulphonic acid groups. As specific examples of groups represented by A there may be mentioned:

6-sulphonaphth-1-yl,
7-sulphonaphth-1-yl,
3,8-disulphonaphth-1-yl,
4,8-disulphonaphth-1-yl,
3,6,8-trisulphonaphth-1-yl,
4,6,8-trisulphonaphth-1-yl,
3,6,8-trisulphonaphth-2-yl,
1,5-disulphonaphth-2-yl,
1-sulphonaphth-2-yl,
6-sulphonaphth-2-yl,
2,5,7-trisulphonaphth-1-yl and
5,7-disulphonaphth-2-yl.

It is preferred that R is $C_{3-4}$-alkenyl, especially allyl, or $C_{1-4}$-alkyl, especially methyl, and optional substituents on R are preferably selected from hydroxyl, methoxy, amino and halo, especially chloro.

Alkyl or alkenyl groups referred to herein having 3 or more carbon atoms may have either straight chain or branched chain structures.

When n is 1, the preferred positions for the sulpho group are the 5 position when -NRY is in the 6 position and the 6 position when -NRY is at position 7.

It is preferred that D is H.

It is preferred that the optionally substituted group Q is selected from H, $C_{1-4}$-alkyl and $C_{3-4}$-alkenyl. Any optional substituents on Q are preferably selected from hydroxy, $C_{1-4}$-alkoxy and halo, especially chloro. It is more preferable that Q is H, unsubstituted $C_{1-4}$-alkyl or unsubstituted $C_{3-4}$-alkenyl. It is especially preferred that Q is selected from H and methyl.

It is preferred that the optional substituents on Q are not acidic or ionic groups such as $-SO_3H$ or $-SO_3Na$.

As a specific example of the quaternary pyridinium substituent in formula (II) there may be mentioned 4-carboxypyridinium.

The dyes, having a quaternary pyridinium group, may be in the form of a salt with an independent anion, preferably a monovalent anion selected from the group $F^-$, $Cl^-$, $Br^-$, $I^-$, $HCO_3^-$, $HSO_4^-$, especially $Cl^-$. The dyes may also exist in zwitterionic form involving the quaternary pyridinium group and one of the acidic groups.

The new dyestuffs of the present invention may be obtained by methods which are described in British Patent No. 937182, for example by treating azo compounds of formula (III) with iso-nicotinic acid derivatives of formula (IV), in aqueous medium.

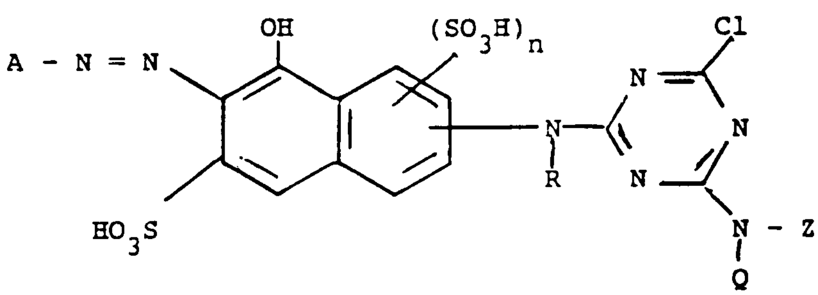

(III)

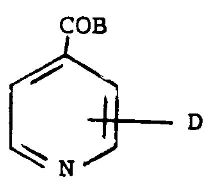

(IV)

wherein A, B, D, n, Q, R and Z have the meanings stated above.

The monoazo compounds of formula (III) may themselves be obtained by diazotising an amine of the formula (V)

$A - NH_2$ (V)

wherein A is defined above, and coupling with a naphthol sulphonic acid of the formula (VI) or (VII):

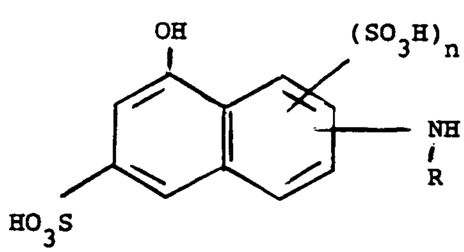

(VI)

or

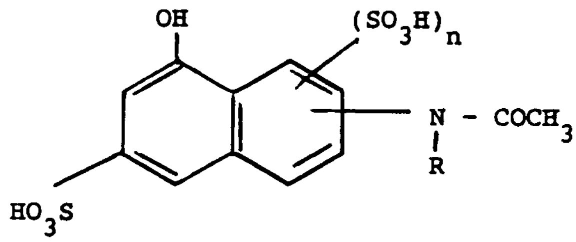

(VII)

wherein R and n are defined above, hydrolysing off the N-acetyl group when present, condensing the resulting aminoazo compound with one molecular proportion of cyanuric chloride and finally condensing with an aromatic amine of the formula (VIII):

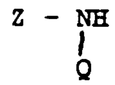

(VIII)

where Z and Q are as defined above.

The naphthol sulphonic acids of Formula VI are, specifically, the N-($C_{1-10}$alkyl) and N-($C_{2-10}$-alkenyl) derivatives especially the N-($C_{1-4}$-alkyl) and more especially the N-methyl derivatives, of
1-hydroxy-6-aminonaphthalene-3-sulphonic acid,
1-hydroxy-7-aminonaphthalene-3-sulphonic acid,
1-hydroxy-6-aminonaphthalene-3,5-disulphonic acid,
1-hydroxy-6-aminonaphthalene-3,7-disulphonic acid,
1-hydroxy-7-aminonaphthalene-3,5-disulphonic acid,
1-hydroxy-7-aminonaphthalene-3,6-disulphonic acid.

The compounds of Formula VII are the N-acetyl derivatives of the above-mentioned compounds of Formula VI.

The dyes may be isolated by known methods, for example spray drying or precipitation and filtration. As in the case of other dyes containing sulphonic acid groups, it is often convenient to isolate and use the dyes in the form of their water-soluble salts, particularly their alkali metal (especially sodium) or ammonium salts. It is to be understood that the invention relates to both the free acids and their salts.

It is surprising that the combination of the substituted pyridinium leaving group from formula A with the phenyl group Z of formula B gives dyes with superior build up and wash-off.

The dyes may be used for colouring a wide range of textile materials containing hydroxyl or amino groups, for example wool, silk, synthetic polyamides and natural or regenerated cellulose, for example cotton or viscose rayon materials, by conventional methods used for colouring such materials with water-soluble reactive dyes. Thus, in the case of cellulose they are preferably applied in conjunction with a treatment with an acid binding agent such as caustic soda, sodium carbonate, phosphate, silicate or bicarbonate, which may be applied to the cellulose textile materials before, during or after the application of the dyestuff.

The dyes of the present invention are valuable reactive dyes for cellulose.

Some of the dyes of the present invention are also valuable in printing and when used as mixtures with disperse dyes under neutral conditions in single bath systems.

The invention is illustrated but not limited by the following examples in which all parts and percentages are by weight unless otherwise indicated.

Example 1

1-Hydroxy-2-(1,5-disulphonaphth-2-ylazo)-6-N-[(4-chloro-6-(N-methyl-N-phenylamino)-s-triazin-2-yl)-methylamino]-naphthalene-3-sulphonic acid

To an ice cold solution of 1-hydroxy-2-(1,5-disulphonaphth-2-ylazo)-6-N-methylamino-naphthalene-3-sulphonic acid (166.6g; 70.3% strength; 0.19M) in water (1250ml) was added, calsolene oil (0.5ml) and then

dropwise with stirring, a solution of cyanuric chloride (40g; 0.22M) dissolved in acetone (40ml). The solution was maintained at pH 6-7 and after 1 hour N-methylaniline (12ml; mol wt 107) was added and the reaction mixture heated to 35° for a further 2 hours. The volume was reduced to approximatley 750ml under reduced pressure and ethanol added to give a precipitate. The resultant solid was collected by filtration and dried to give the crude product 175g.

Quaternisation

1-Hydroxy-2-(1,5-disulphonaphth-2-ylazo)-6-N-[(4-(4-carboxypyridinium]-6-N-methyl-N-phenylamino-s-triazin-2-yl)-N-methylamino]-naphthalene-3-sulphonic acid

To 80 parts of water was added 6 parts of 1-hydroxy-2-(1,5-disulphonaphth-2-ylazo)-6-N-[(4-chloro-6-N-methyl-N-phenylamino-s-triazin-2-yl)-N-methylamino]-naphthalene-3-sulphonic acid and 2.6 parts of iso-nicotinic acid. The reaction mixture was adjusted to pH 7.0 and heated with stirring for 10 hours at 80°C. The product was isolated by salting to 20% with sodium chloride and by filtration of the resultant suspension, to give the product 5.8g.

When applied to cellulosic materials in conjunction with an acid binding agent the dyestuff yields orange shades possessing excellent wash fastness, build up and wash off.

Example 2

A solution of 2-chloro-4-(N-isopropyl-N-phenylamino)-6-(N-methyl-1-hydroxy-2-[1,5-disulphonaphth-2-ylazo]-3-sulphonaphth-6-ylamino)-s-triazine (18.86g, 44.7% strength, 0.01m) and iso-nicotinic acid (8.61g, 0.07m) in water (250ml) was stirred at 80°C for 24 hours. On cooling, potassium chloride (37.5g, 15% w/v) was added and the precipitated dye collected. Yield 14.5g.

By the same procedure the following dyes of formula I wherein D is H can be prepared.

| Ex. | A | R | Q | Z | B | Position of NRY | Position of $(SO_3H)_n$ | Colour |
|---|---|---|---|---|---|---|---|---|
| 3 | 1,5-disulpho naphthyl | $CH_2-CH=CH_2$ | $CH_3$ | $C_6H_5$ | OH | 6 | n=0 | Orange |
| 4 | 1-sulpho-naphth-2-yl | $i-C_3H_7$ | $i-C_3H_7$ | $C_6H_5$ | OH | 6 | n=0 | Orange |
| 5 | 3,6,8-trisulpho-naphth-2-yl | $CH_3$ | $i-C_3H_7$ | Ph | OH | 6 | n=0 | Reddish Orange |

## Claims

**1.** A reactive dye which in the free acid form has the formula:

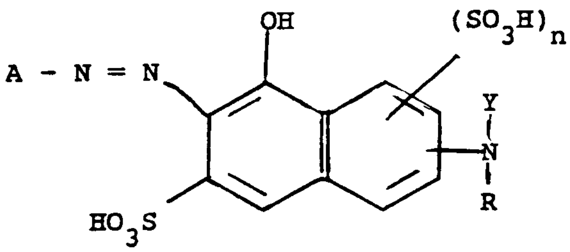

wherein:
Y is

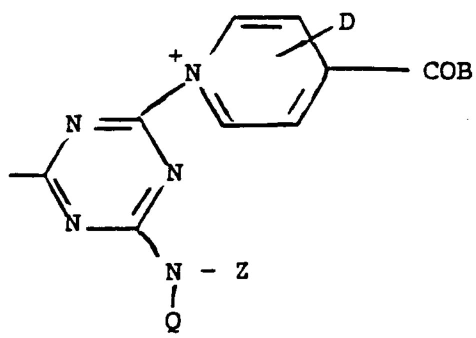

wherein:

| | |
|---|---|
| A | is optionally substituted naphthyl; |
| the -NRY group | is attached to the naphthalene nucleus in the 6- or 7-position relative to the -OH group; |
| n | is 0 or 1, the $SO_3H$ group, when n is 1, being attached to the 5-position or to whichever is free of the 6- and 7-positions; |
| R | is optionally substituted alkyl or alkenyl containing up to 10 carbon atoms; |
| Q | is H or optionally substituted alkyl or alkenyl containing up to 10 carbon atoms; |
| Z | is phenyl; |
| D | is H, chloro, $C_{1-4}$-alkoxy, $SO_3H$ or $C_{1-4}$-alkyl; and |
| B | is OH; |

**2.** A reactive dye according to claim 1 wherein A is naphthyl carrying from one to three sulphonic acid groups.

**3.** A reactive dye according to claim 1 or claim 2 wherein R is $C_{1-4}$-alkyl or $C_{3-4}$-alkenyl.

**4.** A reactive dye according to any preceding claim wherein Q is $C_{1-4}$-alkyl or $C_{3-4}$-alkenyl.

5. The reactive dye according to claim 1 which in the zwitterion form has the formula:

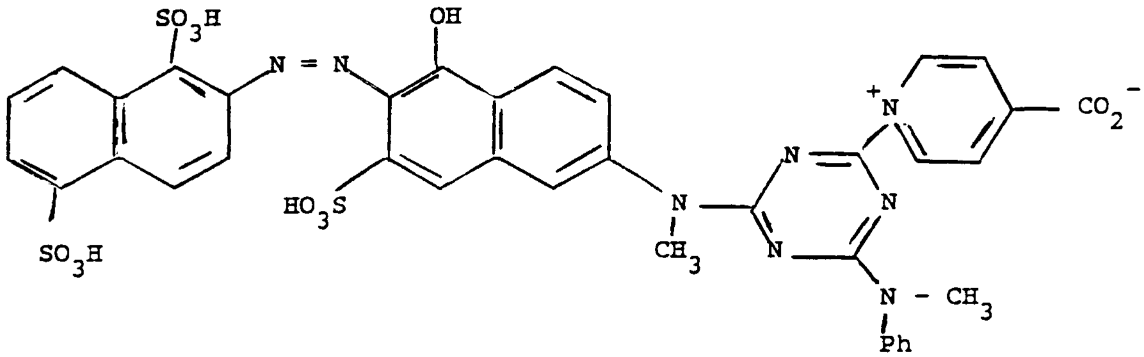

6. A method for the preparation of the reactive dye defined in claim 1 which comprises reacting an azo compound of the formula:

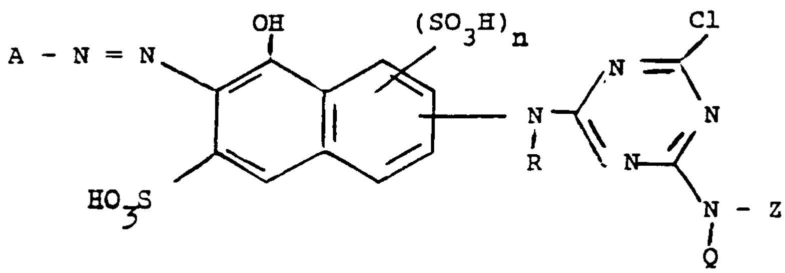

with an iso-nicotinic acid derivative of the formula:

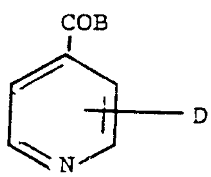

wherein A, B, D, n, Q, R and Z have the meanings given in claim 1.

7. A method of colouring textile materials which comprises applying thereto a reactive dye as defined in any of claims 1 to 7.

8. A method of colouring textile materials by applying thereto mixtures comprising a disperse dye and a reactive dye defined in any of claims 1 to 7.

## Patentansprüche

1. Reaktivfarbstoffe, welche in Form der freien Säure die Formel

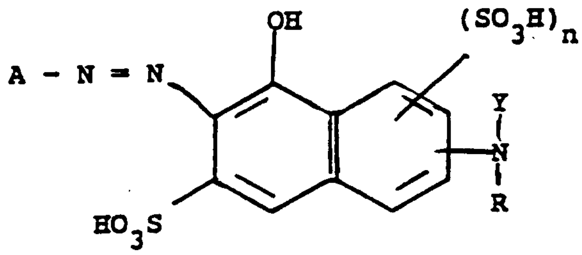

aufweisen, worin
Y für

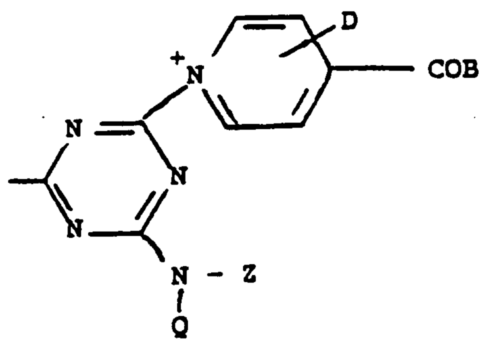

steht; worin
A für gegebenenfalls substituiertes Naphthyl steht;
die Gruppe -NRY bezüglich der Gruppe -OH des Naphthalin-Kerns an die 6- oder 7-Stellung gebunden ist;
n für 0 oder 1 steht, wobei die Gruppe $SO_3H$, wenn n für 1 steht, an die 5-Stellung oder je nachdem, welche frei ist, an die 6- oder 7-Stellung gebunden ist;
Q für H oder gegebenenfalls substituiertes Alkyl oder Alkenyl mit bis zu 10 Kohlenstoffatomen steht;
Z für Phenyl steht;
D für H, Chloro, $C_{1-4}$-Alkoxy, $SO_3H$ oder $C_{1-4}$-Alkyl steht; und
B für OH steht.

2. Reaktivfarbstoffe nach Anspruch 1, worin A für Naphthyl steht, das 1 bis 3 Sulfonsäure-Gruppen trägt.

3. Reaktivfarbstoffe nach Anspruch 1 oder 2, worin R für $C_{1-4}$-Alkyl oder $C_{3-4}$-Alkenyl steht.

4. Reaktivfarbstoffe nach einem der vorhergehenden Ansprüche, worin Q für $C_{1-4}$-Alkyl oder $C_{3-4}$-Alkenyl steht.

5. Reaktivfarbstoff nach Anspruch 1, welcher in der Zwitterionen-Form die Formel

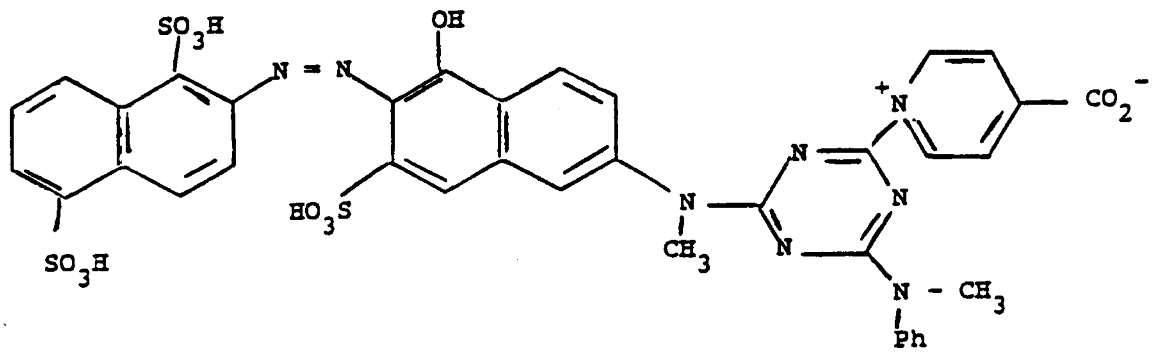

besitzt.

6. Verfahren zur Herstellung eines Reaktivfarbstoffes nach Anspruch 1, bei welchem eine Azoverbindung der Formel

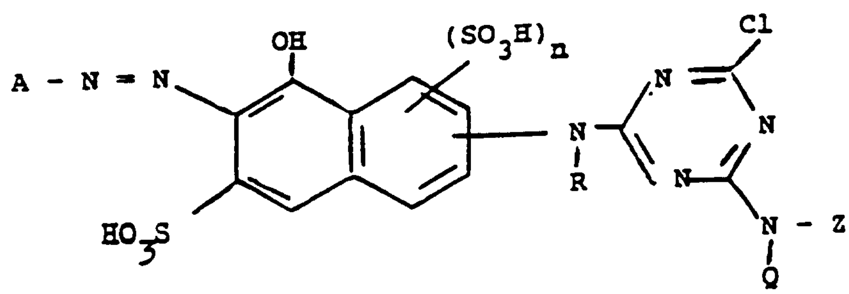

mit einem Isonicotinsäure-Derivat der Formel

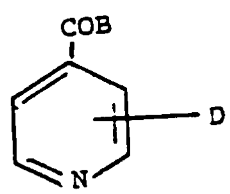

umgesetzt wird, wobei A, B, D, n, Q, R und Z die in Anspruch 1 angegebenen Bedeutungen besitzen.

7. Verfahren zum Färben von Textilmaterialien, bei welchen auf diese ein Reaktivfarbstoff nach einem der Ansprüche 1 bis 5 aufgebracht wird.

8. Verfahren zum Färben von Textilmaterialien, bei welchem auf diese Gemische aus einem Dispersionsfarbstoff und einem in den Ansprüchen 1 bis 5 definierten Reaktivfarbstoff aufgebracht wird.

## Revendications

1. Colorant réactif qui, sous forme d'acide libre, répond à la formule :

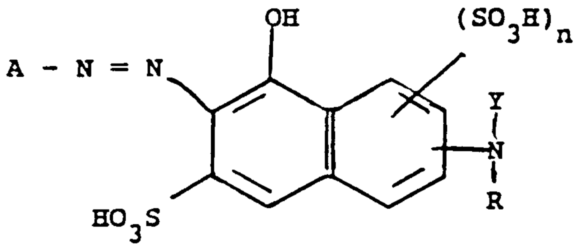

dans laquelle :
Y représente un groupe de formule

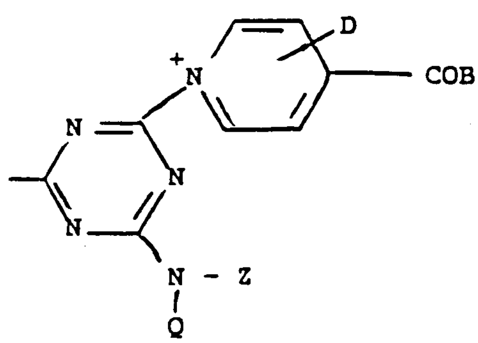

formules dans lesquelles :
A représente un groupe naphtyle facultativement substitué ;
le groupe -NRY est fixé au noyau naphtalène en position 6 ou 7 par rapport au groupe -OH ;
n est égal à 0 ou 1, le groupe $SO_3H$, lorsque n est égal à 1, étant fixé en position 5 ou à n'importe quelle position à l'exception des positions 6 et 7 ;
R représente un groupe alkyle ou alcényle facultativement substitué, contenant jusqu'à 10 atomes de carbone ;
Q représente H ou un groupe alkyle ou alcényle facultativement substitué, contenant jusqu'à 10 atomes de carbone ;
Z représente un groupe phényle ;
D représente H, un groupe chloro, alkoxy en $C_1$ à $C_4$, $SO_3H$ ou alkyle en $C_1$ à $C_4$ ; et
B représente un groupe OH.

2. Colorant réactif suivant la revendication 1, dans lequel A représente un groupe naphtyle portant 1 à 3 groupes acide sulfonique.

3. Colorant réactif suivant la revendication 1 ou la revendication 2, dans lequel R représente un groupe alkyle en $C_1$ à $C_4$ ou alcényle en $C_3$ ou $C_4$.

4. Colorant réactif suivant l'une quelconque des revendications précédentes, dans lequel Q représente un groupe alkyle en $C_1$ à $C_4$ ou alcényle en $C_3$ ou $C_4$.

5. Colorant réactif suivant la revendication 1, qui, sous forme d'un zwitterion, répond à la formule :

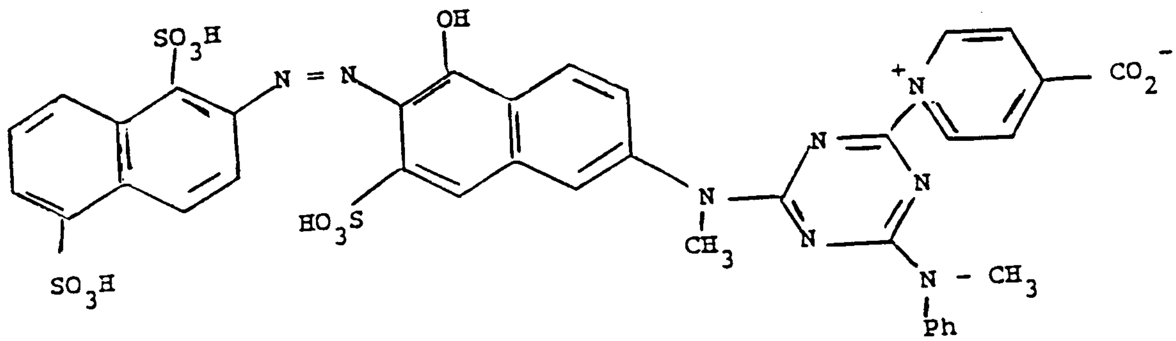

6. Procédé de préparation du colorant réactif répondant à la définition suivant la revendication 1, qui comprend la réaction d'un composé azoïque de formule :

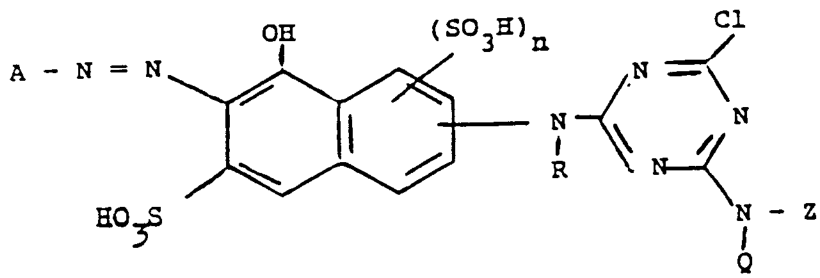

avec un dérivé d'acide isonicotinique de formule :

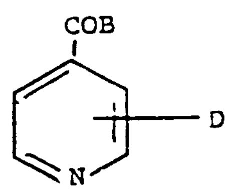

formules dans lesquelles A, B, D, n, Q, R et Z répondent aux définitions figurant dans la revendication 1.

7. Procédé de coloration de matières textiles, qui comprend l'application à ces matières textiles d'un colorant réactif répondant à la définition suivant l'une quelconque des revendications 1 à 7.

8. Procédé de coloration de matières textiles par application à ces matières textiles de mélanges comprenant un colorant dispersé et un colorant réctif répondant à la définition suivant l'une quelconque des revendications 1 à 7.